# EUROPEAN PATENT APPLICATION

(11) **EP 2 172 888 A1**
(43) Date of publication of application: **07.04.2010**
(21) Application number: 09171799.1
(22) Date of filing: 30.09.2009
(51) Int. Cl.: G06Q 10/00

(54) **Data recorder for industrial automation systems**

(30) Priority: 30.09.2008 US 242436
(71) Applicant: Rockwell Automation Technologies, Inc., Mayfield Heights, OH 44124 (US)
(72) Inventor: McGreevy, Robert Joseph, Oswego, IL 60543 (US); Pantaleano, Michael John, Willoughby, OH 44094 (US); Fuller, Bruce Gordon, Edmonton Alberta T6L-6J5 (CA); Tooke, Ian Edward, Barrie Ontario L4M3G7 (CA); Albert, Kevin John, Brookfield, WI 53005 (US); Baier, John Joseph, Mentor, OH 44060 (US); Pingel, Jan, New Berlin, WI 53146 (US)
(74) Representative: Grünecker, Kinkeldey, Stockmair & Schwanhäusser Anwaltssozietät

(57) **Abstract**

Systems and methods for efficiently improving manufacturing conditions are presented herein. A data collection component can record one or more manufacturing parameters of a product during a manufacture of the product. A historical component can retrieve stored manufacturing information related to the product. In addition, a prediction component can predict, during the manufacture, an outcome associated with the manufacture. The prediction can be based on, at least in part, the recorded manufacturing parameter(s) and the retrieved information. A specification component can determine a desired characteristic state for at least one of the recorded manufacturing parameters, and a suggestion component can recommend, during the manufacture, an adjustment of at least one parameter based on, at least in part, the predicted outcome and the desired characteristic state for the at least one recorded manufacturing parameter(s). A notification component can alert one or more factory personnel of the recommendation during the manufacture.

## Description

### TECHNICAL FIELD

This disclosure relates generally to industrial systems, and in particular, but not exclusively, relates to data recorder methods and systems for industrial control.

### BACKGROUND

Industrial control systems are utilized to perform control and data acquisition functions related to industrial process, manufacturing equipment, and factory automation. One type of industrial controller central to an industrial control system is a logic processor called a programmable logic controller (PLC). Programmable logic controllers (PLCs) can be programmed by one or more users to control manufacturing equipment (*e.g.*, to control the opening and closing of valves, control adjustment of temperature and/or humidity, control motors, *etc*.) and/or to monitor a manufacturing process (*e.g.*, by collecting data from sensors, generating alarms, *etc*.). Further, various input/output (I/O) devices (*e.g.*, limit switches, photocells, load cells, thermocouples, *etc*.) can be connected to PLCs for automated data collection.

Another type of industrial controller at the core of most industrial control systems is a process controller of a distributed control system (DCS). Such process controllers are typically programmed for continuous process control of manufacturing operations (*e.g.*, within an oil refinery or a chemical manufacturing plant). A control engineer can configure control elements (*e.g.*, proportional-integral-derivative (PID) control loops) to continuously sample I/O data stored as process variables. The control elements can further be configured to compare one or more process variables to one or more control set points and output at least one error signal, for example, proportional to the difference between the one or more set points and the one or more process variables. In response to these error signals, the control engineer can adjust the control elements to modify a process property in an attempt to minimize the output error signal(s), such as adjusting a valve in a pipe for flow control or adjusting a heating element in a distillation column for temperature control. Many process controllers can be distributed among manufacturing operations and communicatively coupled to each other to form a distributed control system.

In conventional manufacturing techniques, the quality of a finished article can be determined through post-manufacturing inspection of the finished article - that is, accepting or rejecting each article (or samples from a production lot) based on how well the article met design specifications. Although intuition of experienced control engineers or factory floor personnel can be used to optimize and/or correct product manufacturing conditions, Statistical Process Control (SPC) has emerged as a way to use statistical tools to predict significant deviations in a manufacturing process that may result in rejected product(s) and/or inefficient production line conditions. For example, two kinds of variations occur in all manufacturing processes that can cause subsequent variations in a final product. One kind of variation - natural/common causes of variation - may be changes in the properties of raw materials, *etc*. used in a manufacturing process. Such variation in a process is small, and generally near the average value of a distribution of the process that forms a bell-shaped normal distribution curve.

Another kind of variation within a manufacturing process can involve a change in input(s) and/or the environment of the manufacturing process. For example, a product's packaging line may be designed to fill each product box with a particular amount of product, *e.g.*, 20 grams of rice. However, during manufacture of the product, some rice boxes will have slightly more/less than 20 grams of rice, in accordance with a distribution of net weights. If the production process, its inputs, and/or environmental changes in the production process (*e.g.*, machines manufacturing the rice begin to wear) the distribution of net weights can change. If this change is allowed to continue unchecked, more and more boxes of rice will be produced that fall outside the tolerances of the manufacturer and/or consumer, resulting in loss of revenue, decreased product quality, and/or waste. A quality engineer and/or process control expert can troubleshoot the root cause of the variation that has crept into the process by utilizing SPC and enable control engineers to correct for the variation.

Conventional techniques for observing and monitoring such variations in a manufacturing process include recording data during product manufacture and later performing various computational methods on the data (*e.g.*, data mining, SPC). However, such techniques require experienced personnel (*e.g.*, quality engineer, process control expert) to review and analyze recorded data, even while products continue to be manufactured in a less than optimal way. Thus, production efficiency is reduced because a production line must be stopped or continue to operate sub-optimally until experienced personnel troubleshoot and identify the cause(s) of manufacturing problems/sub-optimal conditions - loss of product revenue often proportional to the time needed for the experienced quality engineer/team to determine the root cause(s) of the manufacturing problem/issue.

Therefore, there is a need to provide industrial systems and methods that enable members of a factory production line to correct and/or optimize manufacturing conditions as soon as possible, without relying on experienced personnel to identify root causes of manufacturing problems or suboptimal manufacturing conditions..

### SUMMARY

The following presents a simplified summary of the innovation to provide a basic understanding of some aspects described herein. This summary is not an extensive overview of the disclosed subject matter. It is not intended to identify key or critical elements of the disclosed subject matter or delineate the scope of the subject innovation. Its sole purpose is to present some concepts of the disclosed subject matter in a simplified form as a prelude to the more detailed description that is presented later.

The claimed subject matter relates to systems and methods that enable efficient correction of manufacturing problems and/or suboptimal manufacturing conditions - improving company profit margins and customer satisfaction. Conventional manufacturing techniques often utilize factory floor personnel intuition and/or computational methods (*e.g.*, Statistical Process Control (SPC), data mining techniques) to correct and/or improve a manufacturing process, usually after a production line continues to operate sub-optimally and/or is stopped. Such techniques require experienced personnel (*e.g.*, quality engineers, experienced operators) to troubleshoot and identify root causes of manufacturing conditions. Although such personnel can direct members of a factory production line to correct manufacturing conditions, production efficiency is reduced and time is lost because a production line must be stopped or continue to operate sub-optimally until the experienced personnel troubleshoot and identify the cause(s) of manufacturing problems/sub-optimal conditions.

Compared to conventional industrial control systems, the novel systems and methods of the claimed subject matter improve manufacturing efficiency by enabling production line personnel to correct and/or improve manufacturing conditions "on-the-fly," without waiting for experienced factory personnel to identify the root cause(s) of manufacturing problems or suboptimal manufacturing conditions. According to one aspect of the disclosed subject matter, a data collection component can record one or more manufacturing parameters of a product during a manufacture of the product. A historical component can retrieve stored manufacturing information related to the product. In addition, a prediction component can predict, during the manufacture, an outcome associated with the manufacture. The prediction can be based on, at least in part, the recorded manufacturing parameter(s) and the retrieved information. By recording information during a product's manufacture, and correlating relevant historical data with the recorded information real-time (*e.g.*, as soon as possible), the novel systems and methods of the subject invention can predict manufacturing outcomes more efficiently than conventional data mining and/or SPC methods.

According to another aspect of the disclosed subject matter, a specification component can determine a desired characteristic state for at least one of the recorded manufacturing parameters. In yet another aspect of the disclosed subject matter, a suggestion component can recommend, during the manufacture, an adjustment of at least one parameter based on, at least in part, the predicted outcome and the desired characteristic state for the at least one recorded manufacturing parameter(s). In one aspect of the subject invention, a notification component can alert one or more factory personnel of the recommendation during the manufacture. Thus, the novel systems and methods of the subject invention can predict and correct manufacturing conditions more efficiently than conventional data mining and SPC methods by analyzing manufacturing and historical data, and recommending possible action(s), as soon as possible - enabling factory floor personnel to correct problems on-the-fly.

In another aspect of the disclosed subject matter, a data store component can store the recorded manufacturing parameter(s) as manufacturing information, which can enable determination of "golden batch" manufacturing conditions (*e.g.*, most desired manufacturing conditions to replicate). According to yet another aspect of the disclosed subject matter, an artificial intelligence component can automatically record the manufacturing parameter(s), automatically store the recorded manufacturing parameter(s), automatically retrieve the stored manufacturing information, and automatically predict the outcome associated with the manufacture. In one aspect of the disclosed subject matter, the artificial intelligence component can further automatically determine the desired characteristic state for the recorded manufacturing parameter(s); automatically recommend adjustment of parameter(s); and at least one of automatically adjust parameter(s) during the manufacture, or automatically alert, during the manufacture, one or more factory personnel of the recommendation.

According to another aspect of the disclosed subject matter, the artificial intelligence component can automatically predict the outcome associated with the manufacture by selectively recording a portion of the manufacturing parameter(s) and/or selectively retrieving a portion of the stored manufacturing information. In yet another aspect of the disclosed subject matter, the artificial intelligence component can automatically determine most desired (*e.g.*, golden batch) manufacturing condition(s) to replicate based on, at least in part, analysis of stored manufacturing information. Further, the artificial intelligence component can automatically recommend the adjustment of parameter(s), and/or automatically adjust the parameter(s), according to the determined most desired manufacturing condition(s). In yet another aspect of the disclosed subject matter, the data collection component can record the manufacturing parameter(s) utilizing a plurality of devices, including an electronic sensor, an imaging device, a sound device, and/or a vibration device.

According to yet another aspect of the disclosed subject matter, the stored manufacturing information/manufacturing parameter(s) can include data related to one or more manufacturing site changes; one or more alarm events related to the manufacture; one or more operator interfaces related to the manufacture; one or more personnel changes related to the one or more operator interfaces; one or more changes related to how the manufacturing information is stored; one or more changes related to how the one or more manufacturing parameters is recorded; and/or one or more changes related to how the stored manufacturing information is retrieved.

The following description and the annexed drawings set forth in detail certain illustrative aspects of the disclosed subject matter. These aspects are indicative, however, of but a few of the various ways in which the principles of the innovation may be employed. The disclosed subject matter is intended to include all such aspects and their equivalents. Other advantages and distinctive features of the disclosed subject matter will become apparent from the following detailed description of the innovation when considered in conjunction with the drawings.

### BRIEF DESCRIPTION OF THE DRAWINGS

Non-limiting and non-exhaustive embodiments of the invention are described with reference to the following figures, wherein like reference numerals refer to like parts throughout the various views unless otherwise specified.

FIG. 1 illustrates a demonstrative system for efficiently correcting and/or improving a manufacturing process, in accordance with an embodiment of the invention.

FIG. 2 illustrates another demonstrative system for efficiently correcting and/or improving a manufacturing process, in accordance with an embodiment of the invention.

FIG. 3 illustrates yet another demonstrative system for efficiently correcting and/or improving a manufacturing process, in accordance with an embodiment of the invention.

FIG. 4 illustrates a demonstrative system that includes a notification component for efficiently correcting and/or improving a manufacturing process, in accordance with an embodiment of the invention.

FIG. 5 illustrates a demonstrative system that includes an artificial intelligence component for efficiently correcting and/or improving a manufacturing process, in accordance with an embodiment of the invention.

FIG. 6 illustrates a process for efficiently correcting and/or improving manufacturing conditions, in accordance with an embodiment of the invention.

FIG. 7 illustrates another process for efficiently correcting and/or improving manufacturing conditions, in accordance with an embodiment of the invention.

FIG. 8 illustrates yet another process for efficiently correcting and/or improving manufacturing conditions, in accordance with an embodiment of the invention.

FIG. 9 illustrates a block diagram of a computer operable to execute the disclosed systems and methods, in accordance with an embodiment of the invention.

FIG. 10 illustrates a schematic block diagram of an exemplary computing environment, in accordance with an embodiment of the invention.

### DETAILED DESCRIPTION

Embodiments of systems and methods for efficiently correcting and/or improving a manufacturing process are described herein.

In the following description, numerous specific details are set forth to provide a thorough understanding of the embodiments. One skilled in the relevant art will recognize, however, that the techniques described herein can be practiced without one or more of the specific details, or with other methods, components, materials, *etc.* In other instances, well-known structures, materials, or operations are not shown or described in detail to avoid obscuring certain aspects.

Reference throughout this specification to "one embodiment" or "an embodiment" means that a particular feature, structure, or characteristic described in connection with the embodiment is included in at least one embodiment of the present invention. Thus, the appearances of the phrase "in one embodiment" or "in an embodiment" in various places throughout this specification are not necessarily all referring to the same embodiment. Furthermore, the particular features, structures, or characteristics may be combined in any suitable manner in one or more embodiments.

As utilized herein, terms "component," "system," "interface," and the like are intended to refer to a computer-related entity, hardware, software (*e.g.*, in execution), and/or firmware. For example, a component can be a process running on a processor, a processor, an object, an executable, a program, and/or a computer. By way of illustration, an application running on a server and the server can be a component. One or more components can reside within a process and a component can be localized on one computer and/or distributed between two or more computers.

The word "exemplary" and/or "demonstrative" is used herein to mean serving as an example, instance, or illustration. For the avoidance of doubt, the subject matter disclosed herein is not limited by such examples. In addition, any aspect or design described herein as "exemplary" and/or "demonstrative" is not necessarily to be construed as preferred or advantageous over other aspects or designs, nor is it meant to preclude equivalent exemplary structures and techniques known to those of ordinary skill in the art. Furthermore, to the extent that the terms "includes," "has," "contains," and other similar words are used in either the detailed description or the claims, such terms are intended to be inclusive - in a manner similar to the term "comprising" as an open transition word - without precluding any additional or other elements.

Artificial intelligence based systems (*e.g.*, explicitly and/or implicitly trained classifiers) can be employed in connection with performing inference and/or probabilistic determinations and/or statistical-based determinations as in accordance with one or more aspects of the disclosed subject matter as described herein. For example, in one embodiment, an artificial intelligence system can be used utilized in accordance with system 500 described below (*e.g.*, artificial intelligence component 510) to automatically record manufacturing parameter(s) during a product's manufacture, store the recorded manufacturing parameter(s), retrieve stored manufacturing information, and predict an outcome associated with the product's manufacture.

Further, as used herein, the term "infer" or "inference" refers generally to the process of reasoning about or inferring states of the system, environment, user, and/or intent from a set of observations as captured *via* events and/or data. Captured data and events can include user data, device data, environment data, data from sensors, sensor data, application data, implicit data, explicit data, *etc.* Inference can be employed to identify a specific context or action, or can generate a probability distribution over states of interest based on a consideration of data and events, for example. Inference can also refer to techniques employed for composing higher-level events from a set of events and/or data. Such inference results in the construction of new events or actions from a set of observed events and/or stored event data, whether the events are correlated in close temporal proximity, and whether the events and data come from one or several event and data sources. Various classification schemes and/or systems (*e.g.*, support vector machines, neural networks, expert systems, Bayesian belief networks, fuzzy logic, and data fusion engines) can be employed in connection with performing automatic and/or inferred action in connection with the disclosed subject matter.

In addition, the disclosed subject matter may be implemented as a method, apparatus, or article of manufacture using standard programming and/or engineering techniques to produce software, firmware, hardware, or any combination thereof to control a computer to implement the disclosed subject matter. The term "article of manufacture" as used herein is intended to encompass a computer program accessible from any computer-readable device, computer-readable carrier, or computer-readable media. For example, computer-readable media can include, but are not limited to, magnetic storage devices (*e.g.*, hard disk, floppy disk, magnetic strips), optical disks (*e.g.*, CD, DVD), smart cards, and flash memory devices (*e.g.*, card, stick, key drive).

It is also noted that the interfaces described herein can include a Graphical User Interface (GUI) to interact with the various components related to industrial control. Such interfaces can include substantially any type of application that sends, retrieves, processes, and/or manipulates factory input data; receives, displays, formats, and/or communicates output data; and/or facilitates operation of an enterprise. Such interfaces can also be associated with an engine, editor tool, or web browser - although other tools and/or applications can be utilized. The GUI can include a display having one or more display objects (not shown) including such aspects as configurable icons, buttons, sliders, input boxes, selection options, menus, tabs, and so forth having multiple configurable dimensions, shapes, colors, text, data and sounds to facilitate operations with the interfaces. In addition, the GUI can also include a plurality of other inputs or controls for adjusting and configuring one or more aspects, such as receiving user commands from a mouse, keyboard, speech input, web site, remote web service, and/or other device such as a camera or video input to affect or modify operations of the GUI and/or industrial process.

Moreover, it is also noted that the term industrial controller as used herein includes both programmable logic controllers (PLCs) and process controllers from distributed control systems (DCSs), and can include functionality that can be shared across multiple components, systems, and/or networks. One or more industrial controllers can communicate and cooperate with various network devices across a network. This can include substantially any type of control, communications module, computer, I/O device, and/or Human Machine Interface (HMI) that communicates *via* the network - the network can include control, automated, and/or a public network(s). The industrial controller can also communicate with and control various other devices and/or I/O modules including analog I/O modules, digital I/O modules, programmed/intelligent I/O modules, other programmable controllers, communications modules, and the like. The network (not shown) can include public networks such as the Internet, intranets, and automation networks such as Control and Information Protocol (CIP) networks including DeviceNet and ControlNet. Further, the network can include Ethernet, DH/DH+, Remote I/O, Fieldbus, Modbus, Profibus, wireless networks, serial protocols, and so forth. In addition, the network devices can include various hardware and/or software components such as switches having virtual local area network (VLAN) capability, local area networks (LANs), wide area networks (WANs), proxies, gateways, routers, firewalls, virtual private network (VPN) devices, servers, clients, computers, configuration tools, monitoring tools, and/or other devices.

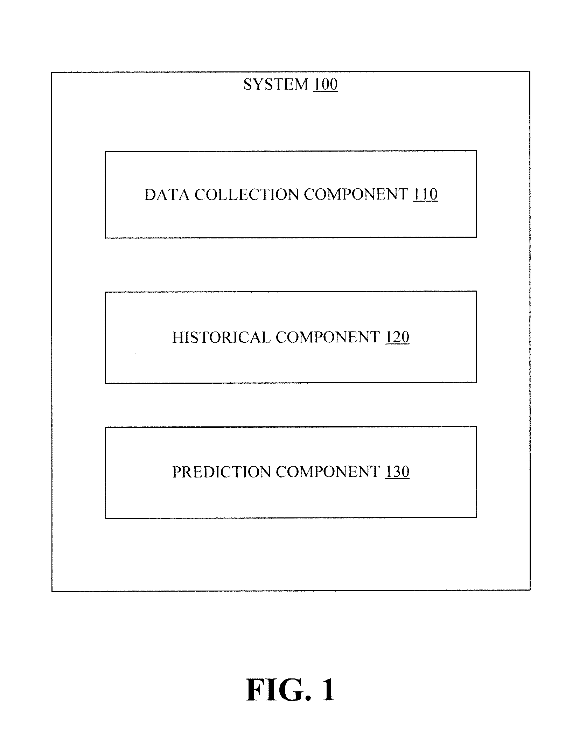

The subject invention provides systems and methods that improve manufacturing efficiency by enabling production line personnel to correct and/or improve manufacturing conditions as soon as possible. To this end, embodiments of the invention correct manufacturing problems and/or suboptimal manufacturing conditions by gathering data during a product's manufacture, correlating the gathered data with historical manufacturing data, and optimizing the product's manufacture based on, at least in part, the correlated data. Such optimization can occur real-time through automated process controls and/or by alerting production line operators adjust at least one control affecting the product's manufacture, without waiting for experienced factory personnel to identify the cause(s) of manufacturing issues. FIG. 1 illustrates a demonstrative system 100 for efficiently correcting and/or improving a manufacturing process, in accordance with an embodiment of the invention. System 100 and the systems and processes explained below may constitute machine-executable instructions embodied within a machine (*e.g.*, computer) readable medium, which when executed by a machine will cause the machine to perform the operations described. Additionally, the systems and processes may be embodied within hardware, such as an application specific integrated circuit (ASIC) or the like. The order in which some or all of the process blocks appear in each process should not be deemed limiting. Rather, it should be understood by a person of ordinary skill in the art having the benefit of the instant disclosure that some of the process blocks may be executed in a variety of orders not illustrated.

As illustrated by FIG. 1, system 100 can include a data collection component 110 that can record one or more manufacturing parameters of a product during a manufacture of the product. It should be appreciated that data collection component 110 can record any data relevant to a manufacturing process, such manufacturing process data (*e.g*., amount of ingredients added to a mixture), manufacturing event based data (*e.g.*, time that ingredients were added to the mixture), and/or alarm based data (*e.g.*, a conveyor belt malfunction detected). Such data can be recorded by any data recording techniques known to those of ordinary skill in the art. For example, data collection component 110 can record manufacturing parameters utilizing at least one of the following devices coupled to data collection component 110: electronic sensors that measure temperature, pressure, and/or humidity; imaging devices such as infrared monitors, video cameras, and/or photo cells; sound devices including microphones; and/or vibration devices that include accelerometers. As another non-limiting example, sensors coupled to data collection component 110 can include Rockwell Automation Allen-Bradely® Condition Sensing products, including Rotating Cam Limit Switches, Speed Switches, Pressure Controls, Temperature Controls, and/or Float Switches.

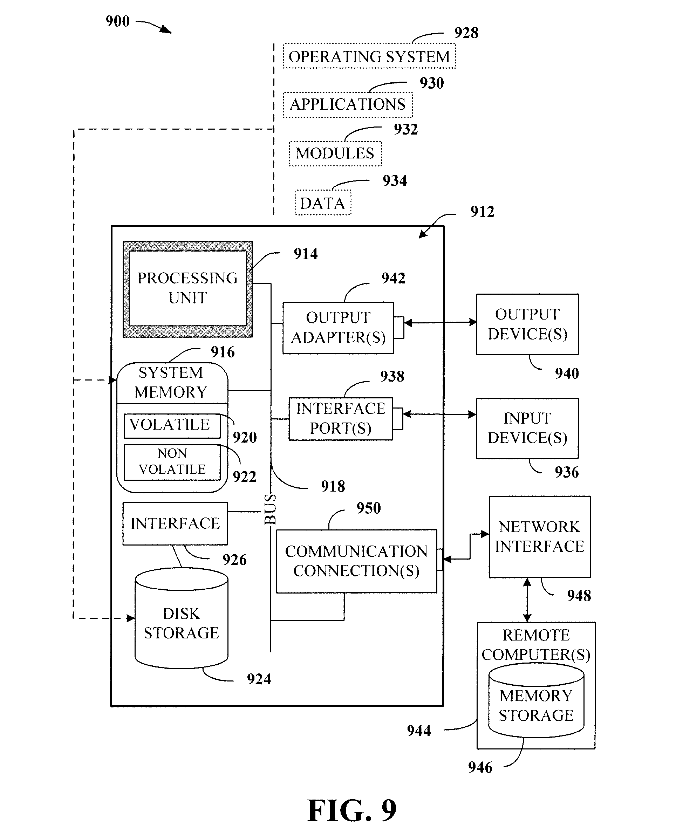

Referring to FIG. 1, a historical component 120 can retrieve stored manufacturing information related to the product. Further, a prediction component 130 can predict, during the manufacture, an outcome associated with the manufacture based on, at least in part, the manufacturing parameters recorded by data collection component 110 and the data retrieved by historical component 120. Historical component 120 can retrieve stored manufacturing information before, during, and after manufacture of the product, and can be coupled to any storage medium that contains stored manufacturing information, such as the removable/non-removable, volatile/nonvolatile computer storage media as described below and illustrated in FIG. 9 (*see e.g.,* 924 and 946). Thus, compared to conventional industrial control technology, embodiments of the subject invention more efficiently correct and/or improve manufacturing conditions by recording information during a product's manufacture, correlating this information with stored manufacturing data, and predicting an outcome of the manufacture during the manufacture based on the correlated information.

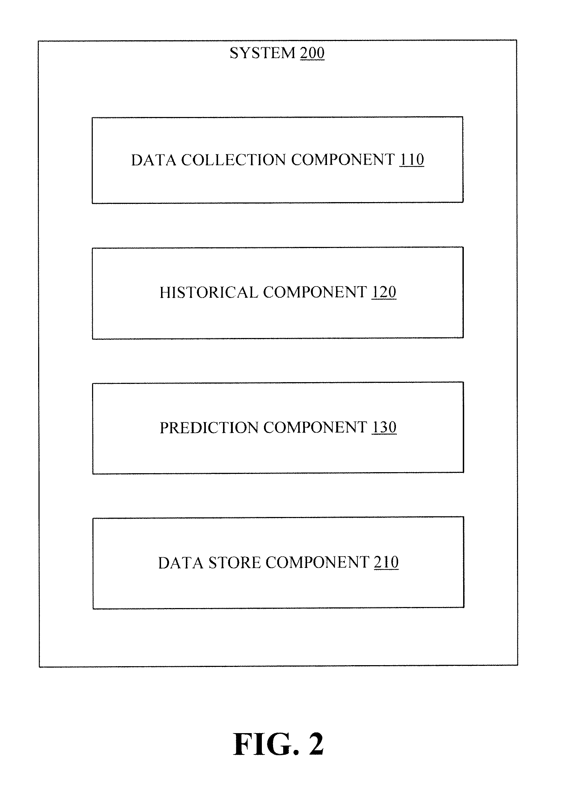

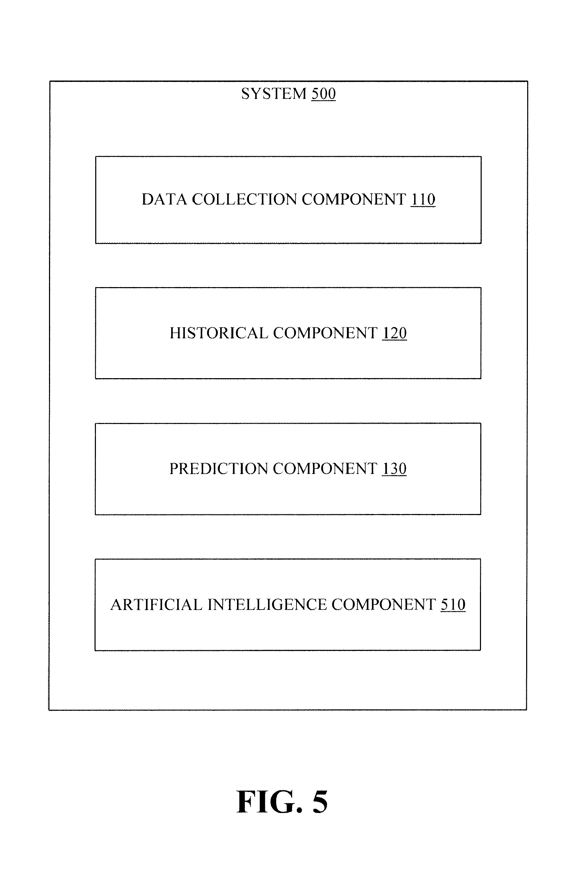

In one embodiment of the invention, the recorded manufacturing parameters and stored manufacturing information can include data related to at least one: manufacturing site change; alarm event related to the manufacture; operator interface related to the manufacture; personnel change associated with an operator interface; change related to how the manufacturing information is stored; change related to how the one or more manufacturing parameters is recorded; change related to how the stored manufacturing information is retrieved; and the like. Moreover, as illustrated by FIG. 2, a demonstrative system 200 can include - in addition to data collection component 110, historical component 120, and prediction component 130 - a data store component 210 that can store, as manufacturing information, the manufacturing parameter(s) recorded by data collection component 110. Such storage of manufacturing parameters can enable derivation of "golden batch" manufacturing conditions *(e.g.,* most desired manufacturing conditions) that an artificial intelligence component 510 can replicate, as described below. *(See* also FIG. 5). By monitoring manufacturing parameters "on-the-fly," the novel system and methods of the claimed subject matter can correlate current manufacturing events with historical manufacturing information and respond to such events as soon as possible. For example, prediction component 130 can predict, based on analysis of historical manufacturing data and input associated with a particular operator interface (*e.g.*, input from a video camera), that a product's manufacture will become suboptimal because an operator is not positioned directly in front of an operator interface associated with visual inspection of the product.

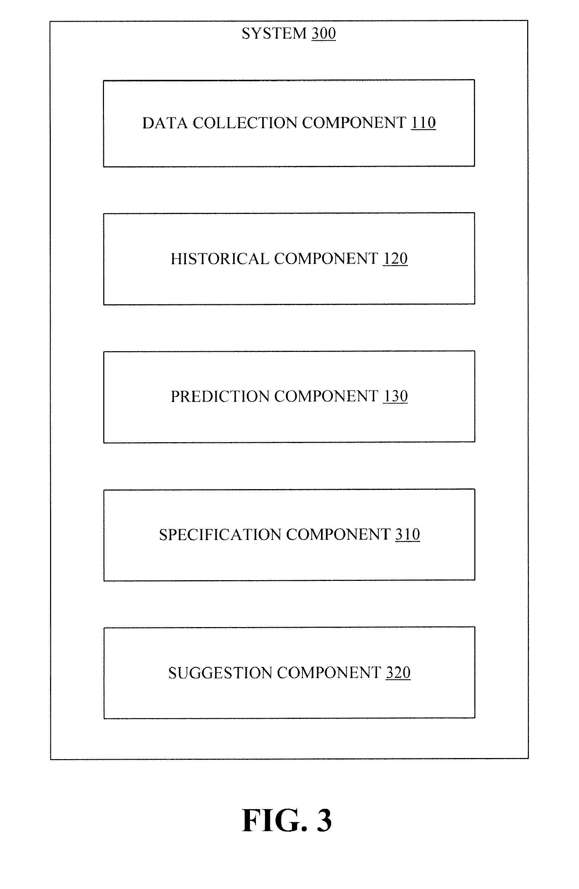

FIG. 3 illustrates another demonstrative system, system 300, for efficiently correcting and/or improving a manufacturing process, in accordance with an embodiment of the invention. System 300 includes a specification component 310 and suggestion component 320 - in addition to data collection component 110, historical component 120, and prediction component 130. Specification component 310 can determine a desired characteristic state for at least one of the recorded manufacturing parameters, such as temperature of a production line. It should be appreciated that specification component 310 can be coupled to an input device for receiving manual entry of the desired characteristic state of a recorded manufacturing parameter. For example, manufacturing personnel can enter such information (*e.g.*, desired manufacturing plant temperature) through an input device coupled to specification component 310, such as a mouse or keyboard as described below and illustrated in FIG. 9 (*see e.g.,* 936). In other embodiments, specification component 310 can automatically determine the desired characteristic state of a recorded manufacturing parameter based on analysis of historical manufacturing data. For example, the desired characteristic state of a recorded manufacturing parameter can be determined based on replicating derived golden batch manufacturing conditions.

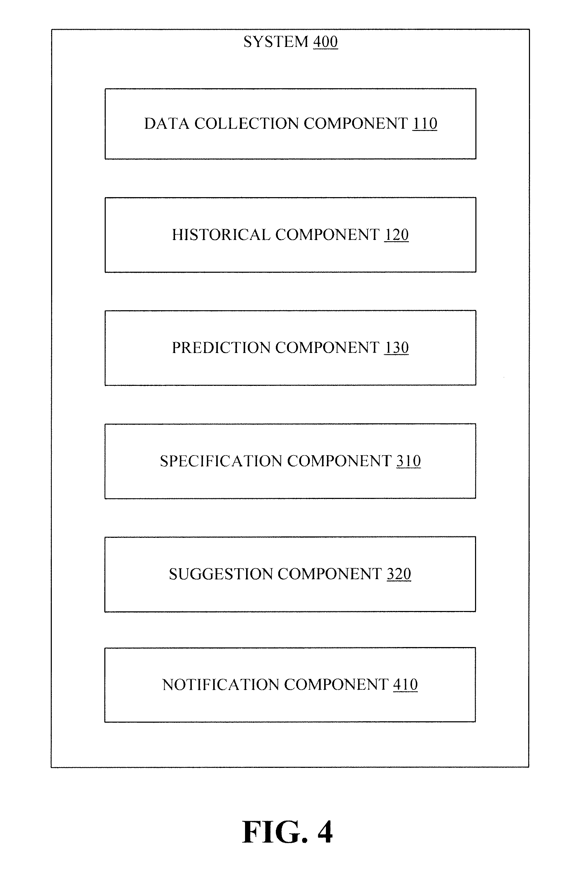

Based on the desired characteristic state(s) determined by specification component 310, and the manufacturing outcome predicted by prediction component 130, suggestion component 320 can recommend, during the manufacture, an adjustment of one or more parameters (regardless of whether the one or more parameters were recorded by data collection component 110). Thus, unlike conventional industrial technology that delays adjustment of manufacturing conditions - in order to wait for experienced personnel to determine the cause(s) of manufacturing issues - the novel systems and methods of the claimed subject matter can determine the cause(s) of manufacturing issues and recommend adjustments to improve and/or correct a manufacturing process during execution of the process. To this end, in the embodiment of the invention illustrated by FIG. 4, a notification component 410 of system 400 can alert one or more factory personnel of the recommendation issued by suggestion component 320. In this way, factory floor personnel are enabled to correct and/or improve manufacturing conditions as soon as possible. It should be appreciated that notification component 410 can notify manufacturing personnel in various ways, including commands conveyed over a GUI (*see* above) and/or commands communicated *via* a network (see above). Moreover, in addition to alerting factory personnel of recommended manufacturing adjustments, notification component 410 can adjust the one more parameters according to the recommendation, without requiring human intervention.

In the embodiment illustrated by FIG. 5, a system 500 includes an artificial intelligence component 510, in addition to a data collection component 110, a historical component 120, and a prediction component 510. Artificial intelligence component 510 can automatically record the manufacturing parameter(s), store the recorded manufacturing parameter(s), retrieve the stored manufacturing information, and predict the outcome associated with the manufacture, without the need for human intervention. In another embodiment, artificial intelligence component 510 can further automatically determine the desired characteristic state for the recorded manufacturing parameter(s); recommend adjustment of parameter(s); and adjust parameter(s) during the manufacture.

In yet another embodiment, artificial intelligence component 510 can automatically predict the outcome associated with the manufacture by selectively recording a portion of the manufacturing parameter(s) and/or selectively retrieving a portion of the stored manufacturing information. In yet another embodiment, artificial intelligence component 510 can automatically determine most desired (*e.g.*, golden batch) manufacturing condition(s) to replicate based on, at least in part, analysis of stored manufacturing information. Further, the artificial intelligence component 510 can automatically recommend the adjustment of parameter(s), and/or automatically adjust the parameter(s), according to the determined most desired manufacturing condition(s). Thus, by automatically reviewing manufacturing data during a manufacture, correlating the data with historical data, and adjusting manufacturing parameters in accordance with best-case manufacturing conditions during the manufacture, the novel systems claimed herein can improve company profit margins and customer satisfaction over conventional industrial systems.

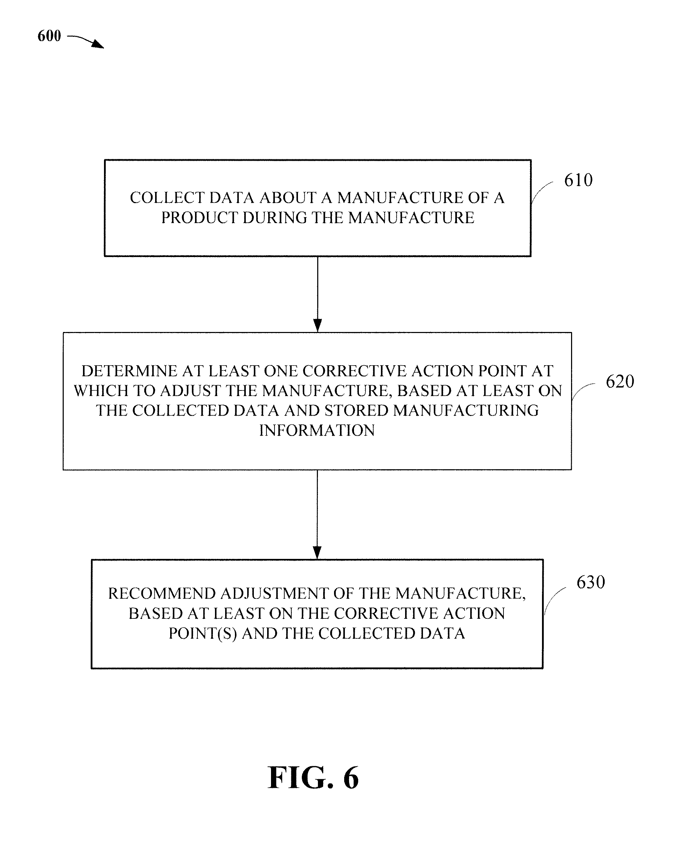

FIGs. 6-8 illustrate methodologies in accordance with the disclosed subject matter. For simplicity of explanation, the methodologies are depicted and described as a series of acts. It is to be understood and appreciated that the subject innovation is not limited by the acts illustrated and/or by the order of acts. For example, acts can occur in various orders and/or concurrently, and with other acts not presented and described herein. Furthermore, not all illustrated acts may be required to implement the methodologies in accordance with the disclosed subject matter. In addition, those skilled in the art will understand and appreciate that the methodologies could alternatively be represented as a series of interrelated states *via* a state diagram or events. Additionally, it should be further appreciated that the methodologies disclosed hereinafter and throughout this specification are capable of being stored on an article of manufacture to facilitate transporting and transferring such methodologies to computers. The term article of manufacture, as used herein, is intended to encompass a computer program accessible from any computer-readable device, carrier, or media.

Referring now to FIG. 6, a process 600 for efficiently correcting and/or improving manufacturing conditions is illustrated, in accordance with an embodiment of the invention. At 610, data can be collected about a manufacture of a product during the manufacture. It is to be understood and appreciated that any data relevant to the manufacture of the product can be collected, such manufacturing process data (*e.g.*, amount of ingredients added to a mixture), manufacturing event based data (*e.g.*, temperature and time at which ingredients were added to the mixture), and/or alarm based data (*e.g.*, warning indicating excessive humidity). Further, it is to be understood and appreciated that such data can be recorded by any data recording techniques known to those of ordinary skill in the art. In one example, data can be collected utilizing Rockwell Automation Allen-Bradely® Condition Sensing products, including Rotating Cam Limit Switches, Speed Switches, Pressure Controls, Temperature Controls, and/or Float Switches.

At 620, at least one corrective action point at which to adjust the manufacture can be determined, based on at least on the data collected at 610 and stored historical manufacturing information. For example, if historically, optimal manufacturing conditions are associated with heating a product's housing to specification within 5 minutes of inserting a product component into the housing, a corrective action point at 5 minutes of inserting a product component into the housing can be set. At 630, an adjustment of the manufacture can be recommended, based at least on the corrective action point(s) and the data collected at 610. Returning to the example, if time of manufacture is within 5 minutes of inserting a product component, and data collected at 610 indicate a product's housing has not been heated to specification, a recommendation can be made at 630 to increase heat applied to the product's housing. In this way, manufacturing conditions can be improved real-time, before manufacturing of a product is complete.

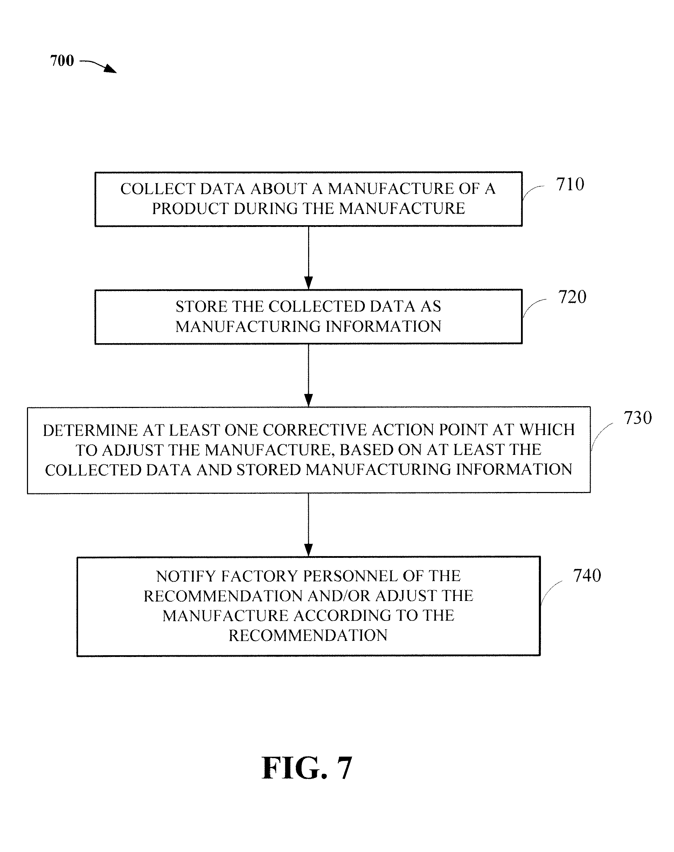

FIG. 7 illustrates another process, 700, for efficiently correcting and/or improving manufacturing conditions, in accordance with an embodiment of the invention. Data can be collected about a manufacture of a product during manufacture of the product at 710. At 720, data collected at 710 can be stored as manufacturing information, available for further analysis associated with the current manufacture and/or future manufacturing of the product. Similar to process step 620 of process 600, at least one corrective action point at which to adjust the manufacture can be determined at 730, based on at least on the data collected at 710 and stored historical manufacturing information. At 740, adjustment of the manufacture according to the recommendation can be made, and/or factory personnel can be notified of the recommendation to enable the factory personnel to correct/improve the product's manufacture before it is complete. Referring to the example above, a factory worker associated with a control station can be notified *via* a GUI, through a wireless network. to increase temperature applied to the product's housing - in this case, production efficiency is enhanced by enabling non-SPC expert factory line technicians to improve manufacturing performance.

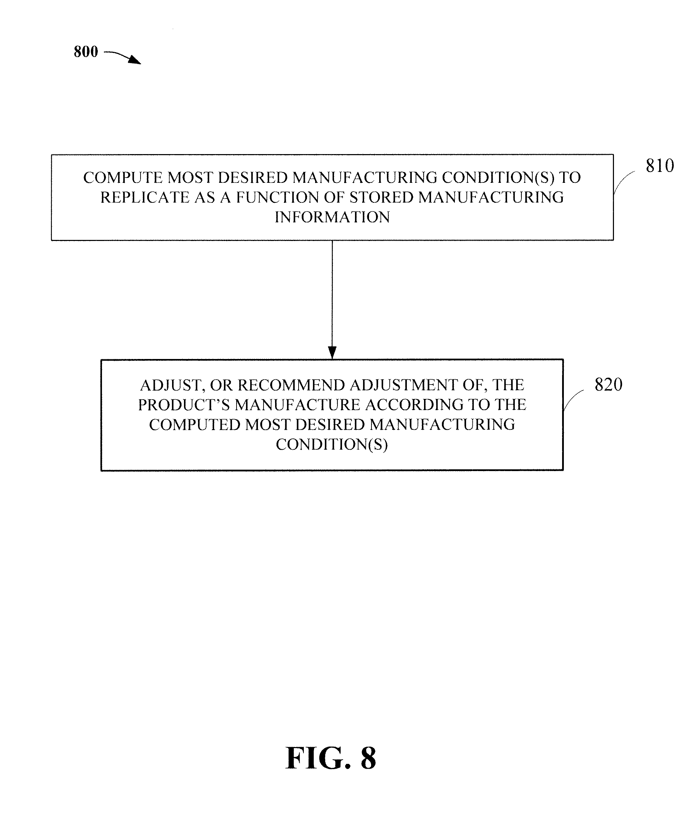

FIG. 8 illustrates yet another process, 800 for efficiently correcting and/or improving manufacturing conditions, in accordance with an embodiment of the invention. At 810, most desired (*e.g.*, golden batch) manufacturing condition(s) to replicate can be automatically determined based on stored manufacturing information. Adjustment of a product's manufacture, and/or recommending adjustment of the product's manufacture, can be automatically performed at 820, according to the most desired manufacturing condition(s) determined at 810. It is to be understood and appreciated that such a process can optimize a product's manufacture by replicating particular optimal manufacturing conditions associated with different production runs. By automatically reviewing manufacturing data during the manufacture, correlating the data with historical data, and adjusting manufacturing parameters in accordance with best-case manufacturing conditions during the manufacture, the novel systems claimed herein can improve company profit margins and customer satisfaction over conventional industrial systems.

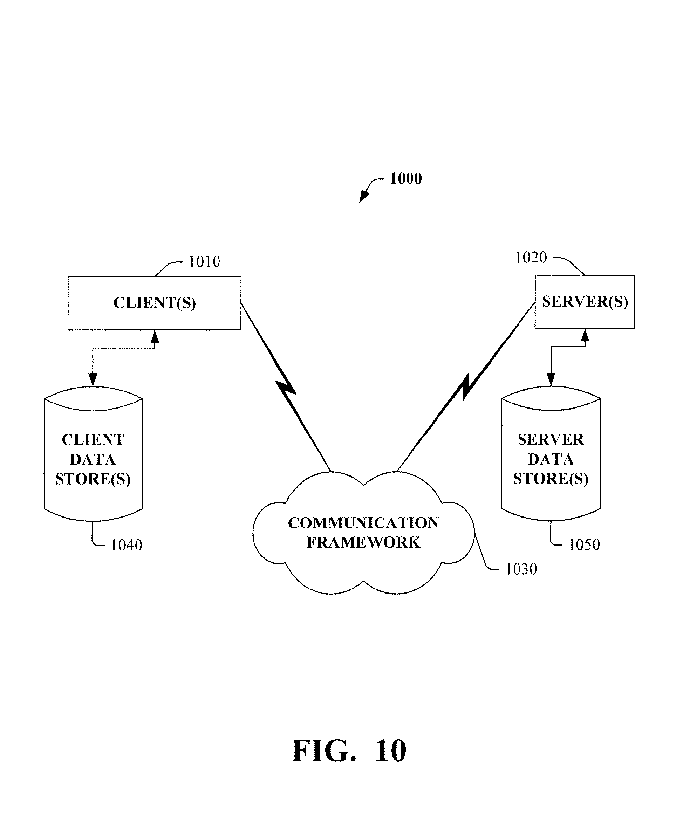

In order to provide a context for the various aspects of the disclosed subject matter, FIGs. 9 and 10, as well as the following discussion, are intended to provide a brief, general description of a suitable environment in which the various aspects of the disclosed subject matter may be implemented. While the subject matter has been described above in the general context of computer-executable instructions of a computer program that runs on a computer and/or computers, those skilled in the art will recognize that the subject innovation also may be implemented in combination with other program modules. Generally, program modules include routines, programs, components, data structures, *etc*. that perform particular tasks and/or implement particular abstract data types.

Moreover, those skilled in the art will appreciate that the inventive systems may be practiced with other computer system configurations, including single-processor or multiprocessor computer systems, mini-computing devices, mainframe computers, as well as personal computers, hand-held computing devices (*e.g.*, PDA, phone, watch), microprocessor-based or programmable consumer or industrial electronics, and the like. The illustrated aspects may also be practiced in distributed computing environments where tasks are performed by remote processing devices that are linked through a communications network. However, some, if not all aspects of the claimed innovation can be practiced on stand-alone computers. In a distributed computing environment, program modules may be located in both local and remote memory storage devices.

With reference to FIG. 9, a block diagram of a computer 900 operable to execute the disclosed systems and methods, in accordance with an embodiment of the invention, includes a computer 912. The computer 912 includes a processing unit 914, a system memory 916, and a system bus 918. The system bus 918 couples system components including, but not limited to, the system memory 916 to the processing unit 914. The processing unit 914 can be any of various available processors. Dual microprocessors and other multiprocessor architectures also can be employed as the processing unit 914.

The system bus 918 can be any of several types of bus structure(s) including the memory bus or memory controller, a peripheral bus or external bus, and/or a local bus using any variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Personal Computer Memory Card International Association bus (PCMCIA), Firewire (IEEE 1194), and Small Computer Systems Interface (SCSI).

The system memory 916 includes volatile memory 920 and nonvolatile memory 922. The basic input/output system (BIOS), containing the basic routines to transfer information between elements within the computer 912, such as during start-up, is stored in nonvolatile memory 922. By way of illustration, and not limitation, nonvolatile memory 922 can include ROM, PROM, EPROM, EEPROM, or flash memory. Volatile memory 920 includes RAM, which acts as external cache memory. By way of illustration and not limitation, RAM is available in many forms such as SRAM, dynamic RAM (DRAM), synchronous DRAM (SDRAM), double data rate SDRAM (DDR SDRAM), enhanced SDRAM (ESDRAM), Synchlink DRAM (SLDRAM), Rambus direct RAM (RDRAM), direct Rambus dynamic RAM (DRDRAM), and Rambus dynamic RAM (RDRAM).

Computer 912 also includes removable/non-removable, volatile/nonvolatile computer storage media. FIG. 9 illustrates, for example, a disk storage 924. Disk storage 924 includes, but is not limited to, devices like a magnetic disk drive, floppy disk drive, tape drive, Jaz drive, Zip drive, LS-100 drive, flash memory card, or memory stick. In addition, disk storage 924 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 924 to the system bus 918, a removable or non-removable interface is typically used, such as interface 926.

It is to be appreciated that FIG. 9 describes software that acts as an intermediary between users and the basic computer resources described in the suitable operating environment 900. Such software includes an operating system 928. Operating system 928, which can be stored on disk storage 924, acts to control and allocate resources of the computer system 912. System applications 930 take advantage of the management of resources by operating system 928 through program modules 932 and program data 934 stored either in system memory 916 or on disk storage 924. It is to be appreciated that the disclosed subject matter can be implemented with various operating systems or combinations of operating systems.

A user enters commands or information into the computer 911 through input device(s) 936. Input devices 936 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 914 through the system bus 918 *via* interface port(s) 938. Interface port(s) 938 include, for example, a serial port, a parallel port, a game port, and a universal serial bus (USB). Output device(s) 940 use some of the same type of ports as input device(s) 936.

Thus, for example, a USB port may be used to provide input to computer 912, and to output information from computer 912 to an output device 940. Output adapter 942 is provided to illustrate that there are some output devices 940 like monitors, speakers, and printers, among other output devices 940, which require special adapters. The output adapters 942 include, by way of illustration and not limitation, video and sound cards that provide a means of connection between the output device 940 and the system bus 918. It should be noted that other devices and/or systems of devices provide both input and output capabilities such as remote computer(s) 944.

Computer 912 can operate in a networked environment using logical connections to one or more remote computers, such as remote computer(s) 944. The remote computer(s) 944 can be a personal computer, a server, a router, a network PC, a workstation, a microprocessor based appliance, a peer device or other common network node and the like, and typically includes many or all of the elements described relative to computer 912.

For purposes of brevity, only a memory storage device 946 is illustrated with remote computer(s) 944. Remote computer(s) 944 is logically connected to computer 912 through a network interface 948 and then physically connected *via* communication connection 950. Network interface 948 encompasses wire and/or wireless communication networks such as local-area networks (LAN) and wide-area networks (WAN). LAN technologies include Fiber Distributed Data Interface (FDDI), Copper Distributed Data Interface (CDDI), Ethernet, Token Ring and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 950 refer(s) to the hardware/software employed to connect the network interface 948 to the bus 918. While communication connection 950 is shown for illustrative clarity inside computer 912, it can also be external to computer 912. The hardware/software necessary for connection to the network interface 948 includes, for exemplary purposes only, internal and external technologies such as, modems including regular telephone grade modems, cable modems and DSL modems, ISDN adapters, and Ethernet cards.

FIG. 10 illustrates a schematic block diagram of an exemplary computing environment 1030, in accordance with an embodiment of the invention. The system 1000 includes one or more client(s) 1010. The client(s) 1010 can be hardware and/or software (*e.g.*, threads, processes, computing devices). The system 1000 also includes one or more server(s) 1020. Thus, system 1000 can correspond to a two-tier client server model or a multi-tier model (*e.g.*, client, middle tier server, data server), amongst other models. The server(s) 1020 can also be hardware and/or software (*e.g.*, threads, processes, computing devices). The servers 1020 can house threads to perform transformations by employing the subject innovation, for example. One possible communication between a client 1010 and a server 1020 may be in the form of a data packet transmitted between two or more computer processes.

The system 1000 includes a communication framework 1030 that can be employed to facilitate communications between the client(s) 1010 and the server(s) 1020. The client(s) 1010 are operatively connected to one or more client data store(s) 1040 that can be employed to store information local to the client(s) 1010. Similarly, the server(s) 1020 are operatively connected to one or more server data store(s) 1050 that can be employed to store information local to the servers 1020.

The above description of illustrated embodiments of the invention, including what is described in the Abstract, is not intended to be exhaustive or to limit the invention to the precise forms disclosed. While specific embodiments of, and examples for, the invention are described herein for illustrative purposes, various modifications are possible within the scope of the invention, as those skilled in the relevant art should recognize.

These modifications can be made to the invention in light of the above detailed description. The terms used in the following claims should not be construed to limit the invention to the specific embodiments disclosed in the specification. Rather, the scope of the invention is to be determined entirely by the following claims, which are to be construed in accordance with established doctrines of claim interpretation.

**The following is a list of further preferred embodiments of the invention:**
Embodiment 1: A computer-implemented system comprising a memory having stored therein computer-executable components and a processor that executes the following computer-executable components:
   a data collection component that records one or more manufacturing parameters of a product during a manufacture of the product;
   a historical component that retrieves stored manufacturing information related to the product; and
   a prediction component that predicts, during the manufacture, an outcome associated with the manufacture, wherein the prediction is based on, at least in part, the recorded one or more manufacturing parameters and the retrieved information.
Embodiment 2: The system of embodiment 1, further comprising a specification component that determines a desired characteristic state for at least one of the recorded one or more manufacturing parameters.
Embodiment 3: The system of embodiment 2, further comprising a suggestion component that recommends, during the manufacture, an adjustment of at least one of the recorded one or more manufacturing parameters, or one or more other parameters; wherein the recommendation is based on, at least in part, the predicted outcome and the desired characteristic state for the at least one of the recorded one or more manufacturing parameters.
Embodiment 4: The system of embodiment 3, further comprising a notification component that alerts one or more factory personnel of the recommendation during the manufacture.
Embodiment 5: The system of embodiment 1, further comprising a data store component that stores the recorded one or more manufacturing parameters as manufacturing information.
Embodiment 6: The system of embodiment 1, further comprising an artificial intelligence component that automatically:
   records the one or more manufacturing parameters;
   stores the recorded one or more manufacturing parameters as manufacturing information;
   retrieves the stored manufacturing information; and
   predicts the outcome associated with the manufacture.
Embodiment 7: The system of embodiment 4, further comprising an artificial intelligence component that automatically:
   determines the desired characteristic state for the at least one of the recorded one or more manufacturing parameters;
   recommends the adjustment of the at least one of the recorded one or more manufacturing parameters, or one or more other parameters; and
   based on the recommendation, at least one of:
      adjusts, during the manufacture, the at least one of the one or more manufacturing parameters, or the one or more other parameters; or
      alerts, during the manufacture, the one or more factory personnel of the recommendation.
Embodiment 8: The system of clam 6, wherein the artificial intelligence component automatically predicts the outcome associated with the manufacture by at least one of:
   selectively recording a portion of the one or more manufacturing parameters;
   selectively retrieving a portion of the stored manufacturing information.
Embodiment 9: The system of embodiment 7, wherein the artificial intelligence component automatically:
   determines at least one most desired manufacturing condition to replicate based on, at least in part, analysis of stored manufacturing information; and
   at least one of:
      recommends the adjustment of the at least one of the recorded one or more manufacturing parameters, or the one or more other parameters, according to the determined at least one most desired manufacturing condition; or
      adjusts the at least one of the recorded one or more manufacturing parameters, or the one or more other parameters, according to the determined at least one most desired manufacturing condition.
Embodiment 10: The system of embodiment 1, wherein the data collection component records the one or more manufacturing parameters utilizing a plurality of devices comprising at least one of an electronic sensor, an imaging device, a sound device, or a vibration device.
Embodiment 11: The system of embodiment 1, wherein at least one of the stored manufacturing information or the one or more manufacturing parameters comprises data related to at least one of the following:
   one or more manufacturing site changes;
   one or more alarm events related to the manufacture;
   one or more operator interfaces related to the manufacture;
   one or more personnel changes related to the one or more operator interfaces;
   one or more changes related to how the manufacturing information is stored;
   one or more changes related to how the one or more manufacturing parameters is recorded; or
   one or more changes related to how the stored manufacturing information is retrieved.
Embodiment 12: A computer-readable medium comprising the system of embodiment 1.
Embodiment 13: A computer-implemented method comprising:
   collecting data associated with a manufacture of a product during the manufacture;
   determining at least one corrective action point at which to adjust the manufacture, based on, at least in part, the collected data associated with the manufacture and stored manufacturing information; and
   recommending adjustment of the manufacture, based on, at least in part, the at least one corrective action point and the collected data associated with the manufacture.
Embodiment 14: The computer-implemented method of embodiment 13, further comprising at least one of:
   adjusting the manufacture according to the recommendation; or
   notifying factory personnel of the recommendation.
Embodiment 15: The computer-implemented method of embodiment 14, further comprising:
   storing the collected data as manufacturing information.
Embodiment 16: The computer-implemented method of embodiment 15, further comprising automatically:
   collecting the data;
   storing the collected data as manufacturing information;
   retrieving the stored manufacturing information;
   determining the at least one corrective action point; and
   at least one of:
      adjusting the manufacture; or
      notifying the factory personnel of the recommendation.
Embodiment 17: The computer-implemented method of embodiment 16, further comprising automatically:
   computing one or more most desired manufacturing conditions to replicate as a function of stored manufacturing information; and
   and at least one of:
      recommending adjustment of the at least one of the recorded one or more manufacturing parameters, or the one or more other parameters, according to the computed one or more most desired manufacturing conditions; or
      adjusting the at least one of the recorded one or more manufacturing parameters, or the one or more other parameters, according to the computed one or more most desired manufacturing conditions.
Embodiment 18: A computer-implemented system comprising a memory having stored therein computer-executable components and a processor that executes the following computer-executable components:
   means for gathering data during a product's manufacture;
   means for correlating the gathered data with historical manufacturing data;
   means for optimizing the product's manufacture based on, at least in part, the correlated data.
Embodiment 19: The system of embodiment 18, wherein the means for gathering data further comprises:
   means for recording at least one of process data, event based data, or alarm based data; wherein the gathered data comprises at least one of operator interaction, set process variables, process timing variables, temperature, humidity, or vibration.
Embodiment 20: The system of embodiment 18, wherein the means for optimizing the product's manufacture further comprises:
   means for alerting production line operators to adjust one or more controls affecting the product's manufacture.

## Claims

1. A computer-implemented system comprising a memory having stored therein computer-executable components and a processor that executes the following computer-executable components:
a data collection component that records one or more manufacturing parameters of a product during a manufacture of the product;
a historical component that retrieves stored manufacturing information related to the product; and
a prediction component that predicts, during the manufacture, an outcome associated with the manufacture, wherein the prediction is based on, at least in part, the recorded one or more manufacturing parameters and the retrieved information.

2. The system of claim 1, further comprising:
a specification component that determines a desired characteristic state for at least one of the recorded one or more manufacturing parameters;
a suggestion component that recommends, during the manufacture, an adjustment of at least one of the recorded one or more manufacturing parameters, or one or more other parameters, wherein the recommendation is based on, at least in part, the predicted outcome and the desired characteristic state for the at least one of the recorded one or more manufacturing parameters; and
a notification component that alerts one or more factory personnel of the recommendation during the manufacture.

3. The system of claim 1, further comprising a data store component that stores the recorded one or more manufacturing parameters as manufacturing information.

4. The system of claim 1, further comprising an artificial intelligence component that automatically:
records the one or more manufacturing parameters;
stores the recorded one or more manufacturing parameters as manufacturing information;
retrieves the stored manufacturing information; and
predicts the outcome associated with the manufacture; and
wherein the artificial intelligence component automatically predicts the outcome associated with the manufacture by at least one of:
selectively recording a portion of the one or more manufacturing parameters;
selectively retrieving a portion of the stored manufacturing information.

5. The system of claim 2, further comprising an artificial intelligence component that automatically:
determines the desired characteristic state for the at least one of the recorded one or more manufacturing parameters;
recommends the adjustment of the at least one of the recorded one or more manufacturing parameters, or one or more other parameters; and
based on the recommendation, at least one of:
adjusts, during the manufacture, the at least one of the one or more manufacturing parameters, or the one or more other parameters; or
alerts, during the manufacture, the one or more factory personnel of the recommendation.

6. The system of claim 5, wherein the artificial intelligence component automatically:
determines at least one most desired manufacturing condition to replicate based on, at least in part, analysis of stored manufacturing information; and
at least one of:
recommends the adjustment of the at least one of the recorded one or more manufacturing parameters, or the one or more other parameters, according to the determined at least one most desired manufacturing condition; or
adjusts the at least one of the recorded one or more manufacturing parameters, or the one or more other parameters, according to the determined at least one most desired manufacturing condition.

7. The system of claim 1, wherein the data collection component records the one or more manufacturing parameters utilizing a plurality of devices comprising at least one of an electronic sensor, an imaging device, a sound device, or a vibration device.

8. The system of claim 1, wherein at least one of the stored manufacturing information or the one or more manufacturing parameters comprises data related to at least one of the following:
one or more manufacturing site changes;
one or more alarm events related to the manufacture;
one or more operator interfaces related to the manufacture;
one or more personnel changes related to the one or more operator interfaces;
one or more changes related to how the manufacturing information is stored;
one or more changes related to how the one or more manufacturing parameters is recorded; or
one or more changes related to how the stored manufacturing information is retrieved.

9. A computer-readable medium comprising the system of claim 1.

10. A computer-implemented method comprising:
collecting data associated with a manufacture of a product during the manufacture; determining at least one corrective action point at which to adjust the manufacture, based on, at least in part, the collected data associated with the manufacture and stored manufacturing information; and
recommending adjustment of the manufacture, based on, at least in part, the at least one corrective action point and the collected data associated with the manufacture.

11. The computer-implemented method of claim 10, further comprising at least one of:
adjusting the manufacture according to the recommendation and notifying factory personnel of the recommendation, and further comprising storing the collected data as manufacturing information.

12. The computer-implemented method of claim 10, further comprising automatically:
collecting the data;
storing the collected data as manufacturing information;
retrieving the stored manufacturing information;
determining the at least one corrective action point; and
at least one of:
adjusting the manufacture; or
notifying the factory personnel of the recommendation.

13. The computer-implemented method of claim 12, further comprising automatically:
computing one or more most desired manufacturing conditions to replicate as a function of stored manufacturing information; and
and at least one of:
recommending adjustment of the at least one of the recorded one or more manufacturing parameters, or the one or more other parameters, according to the computed one or more most desired manufacturing conditions; or adjusting the at least one of the recorded one or more manufacturing parameters, or the one or more other parameters, according to the computed one or more most desired manufacturing conditions.

14. A computer-implemented system comprising a memory having stored therein computer-executable components and a processor that executes the following computer-executable components:
means for gathering data during a product's manufacture;
means for correlating the gathered data with historical manufacturing data;
means for optimizing the product's manufacture based on, at least in part, the correlated data.

15. The system of claim 14, wherein the means for gathering data further comprises:
means for recording at least one of process data, event based data, or alarm based data; wherein the gathered data comprises at least one of operator interaction, set process variables, process timing variables, temperature, humidity, or vibration; and
wherein the means for optimizing the product's manufacture further comprises:
means for alerting production line operators to adjust one or more controls affecting the product's manufacture.
